# EUROPÄISCHE PATENTSCHRIFT

(11) **EP 2 171 437 B1**
(45) Veröffentlichungstag und Bekanntmachung des Hinweises auf die Patenterteilung: **06.09.2017**
(21) Anmeldenummer: 08774665.7
(22) Anmeldetag: 02.07.2008
(51) Int. Cl.: G01N 1/22, G01N 15/06

(54) **SENSORELEMENT ZUR DETEKTION VON LEITFÄHIGEN PARTIKELN IN EINEM GASSTROM SOWIE VERFAHREN ZU DESSEN HERSTELLUNG UND DESSEN VERWENDUNG**
SENSOR UNIT FOR THE DETECTION OF CONDUCTIVE PARTICLES IN A FLOW OF GAS AND METHODS FOR THE PRODUCTION AND USE THEREOF
ÉLÉMENT DÉTECTEUR POUR DÉTECTION DE PARTICULES CONDUCTRICES DANS UN FLUX GAZEUX, PROCÉDÉS DE PRODUCTION ET UTILISATION

(30) Priorität: 17.07.2007 DE 102007033213
(43) Veröffentlichungstag der Anmeldung: 07.04.2010
(73) Patentinhaber: Robert Bosch GmbH, 70442 Stuttgart (DE)
(72) Erfinder: BAUER, Thorsten, 96047 Bamberg (DE); WENDLING, Bettina, 80686 Muenchen (DE); SCHITTENHELM, Henrik, 70182 Stuttgart (DE)
(86) Internationale Anmeldenummer: PCT/EP2008/058531
(87) Internationale Veröffentlichungsnummer: WO 2009/010389

(56) Entgegenhaltungen:
- WO-A-03/006976
- WO-A-2008/025602
- DE-A1- 10 149 333
- DE-A1-102004 059 650

## Beschreibung

Die vorliegende Erfindung betrifft ein Sensorelement zur Detektion von leitfähigen Partikeln in einem Gasstrom gemäß dem Oberbegriff des Anspruchs 1, Verfahren zu dessen Herstellung gemäß Ansprüchen 7 und 8 sowie dessen Verwendung gemäß Anspruch 9.

### Stand der Technik

In naher Zukunft muss der Partikelausstoß, insbesondere von Fahrzeugen während des Fahrbetriebes, nach dem Durchlaufen eines Motors bzw. Dieselpartikelfilters (DPF) per gesetzlicher Vorschrift überwacht werden (On Board Diagnosis, OBD). Darüber hinaus ist eine Beladungsprognose von Dieselpartikelfiltern zur Regenerationskontrolle notwendig, um eine hohe Systemsicherheit bei wenigen effizienten, kraftstoffsparenden Regenerationszyklen zu gewährleisten und kostengünstige Filtermaterialien, beispielsweise Cordierit, einsetzen zu können.

Eine Möglichkeit hierzu bieten aus dem Stand der Technik bekannte resistive Partikelsensoren, insbesondere resistive Rußpartikelsensoren. Resistive Partikelsensoren ziehen zur Detektion des Partikelausstoßes eine durch Partikelanlagerung hervorgerufene Widerstandsänderung eines Elektrodensystems mit zwei metallischen, kammartig ineinander greifenden Elektroden (Intedigitalelektroden), die auf einem keramischen Trägerelement angeordnet sind, heran. Aufgrund ihrer Funktionsweise ordnen sich resistive Partikelsensoren bei den sammelnden Prinzipien ein.

Derartige Sensoren werden von der DE 101 493 33 A1 sowie der WO 2003006976 A2 beschrieben. Aus der DE 10 2004 059 650 A1 ist bereits ein Sensor zur Bestimmung der Konzentration von Partikeln in Gasen, insbesondere von Rußpartikeln, bekannt. Dieser Sensor weist mindestens ein Trägerelement und einen Messbereich zwischen mindestens einer ersten und einer zweiten Messelektrode auf. Die beiden Messelektroden sind dabei so gestaltet, dass unter Beaufschlagung einer Spannung zwischen den Messelektroden ein asymmetrisches elektrisches Feld auf dem Messbereich gebildet wird. Dies wird dadurch erreicht, dass wenigstens eine der Messelektroden eine ebenflächige Struktur aufweist, die durch regelmäßig angeordnete Spitzen, Quadrate, Punkte oder andere geometrische Formen gebildet wird.

Aus der nicht vorveröffentlichten WO 2008/025602 A1 ist bereits ein Sensorelement zur Detektion von leitfähigen Partikeln in einem Gasstrom bekannt. Der Sensor umfasst dabei ein Interdigitalelektrodensystem mit mindestens zwei kammartig ineinander greifenden Interdigitalelektroden und eine Trägerschicht, wobei das Interdigitalelektrodensystem auf der Trägerschicht angeordnet ist. Die Interdigitalelektroden weisen insofern eine gewisse Profilstruktur auf, da auf den gesamten Sensor sowohl über die Interdigitalelektroden als auch über die Zwischenräume zwischen den Interdigitalelektroden direkt auf die Oberfläche der Trägerschicht ein Lack aufgebracht wird, der nach Auftragung und Trocknung Schwindungsrisse ausbildet. Der aufgebrachte Lack ist ausschließlich in den Zwischenräumen zwischen den Interdigitalelektroden gewünscht, da hier die Risse für die angestrebten elektrischen Unterbrechungen sorgen. Der Einfachheit halber wird der Lack jedoch gleichmäßig über den gesamten Sensor aufgetragen, so dass auf diese Weise auch die Interdigitalelektroden mit dem Lack überzogen werden, weshalb nach dem Trocknen auch im Bereich der Interdigitalelektroden die Schwindungsrisse entstehen.

Derzeit sind resistive Partikelsensoren, insbesondere Rußpartikelsensoren, bekannt, bei denen sich unter Einwirkung einer elektrischen Messspannung (Elektrophorese) leitfähige Partikel zwischen den Elektroden anlagern und Partikelpfade bilden, welche zwei Leiterbahnen einer Interdigitalelektrode kurzschließen und so mit steigender Partikelkonzentration auf der Sensoroberfläche ein abnehmender Widerstand (bzw. ein zunehmender Strom bei konstanter angelegter Spannung) zwischen den Elektroden messbar wird. Nach Erreichen eines Schwellwertes kann ein Zeitintervall (Auslösezeit) bestimmt werden, dessen Zunahme mit der Partikelmasse auf der Sensoroberfläche korreliert.

Problematisch an diesen Sensoren ist die Anlagerung von nicht brennbaren Aschen (z.B. aus anorganischen Bestandteilen der Motoröle) die langfristig zu einer Vergiftung des Sensors führen können. Diese Aschen bedecken die Interdigitalelektroden des Sensors und führen zu einem Empfindlichkeitsrückgang.

Da der Sensor bei der Anwendung zur Überwachung eines Partikelfilters bezüglich des Partikelfilters stromabwärts des Abgasstroms angeordnet ist und der Wirkungsgrad der meisten technisch verwendeten Filter hoch ist, sollte solange wie der Filter voll funktionsfähig ist, keine Anlagerung von leitfähigen Partikel und Aschen, das heißt hochohmigen (isolierenden), anorganischen Verbindungen, die sich nicht durch Erhitzen auf etwa 600 °C entfernen lassen, an dem Sensor auftreten.

Es ist jedoch erwünscht, dass eine kleine - vom Gesetzgeber bzw. von der Zertifizierungsbehörde noch als zulässig betrachtete - Filterschädigung noch nicht zu einer Alarm-Auslösung bezüglich der Partikelfilterüberwachung führt. Bedingt hierdurch können Partikelsensoren über längere Zeit einer geringen Menge an Asche ausgesetzt sein, wobei es in ungünstigen Fällen zu einer Vergiftung kommen kann. Darüber hinaus ist der Einsatz von Filtern vorgesehen, die auch im Neuzustand eine gewisse Durchlässigkeit für leitfähige Partikel und isolierende Aschepartikel haben. In diesem Fall ist ebenso mit einer langsamen Vergiftung des Sensors durch isolierende Ascheanlagerung zu rechnen. Die stetige Vergiftung des Partikelsensors führt wiederum zu einem Empfindlichkeitseinbruch des Sensors.

### Offenbarung der Erfindung

### Vorteile der Erfindung

Ein erfindungsgemäßes Sensorelement zur Detektion von leitfähigen Partikel in einem Gasstrom gemäss Anspruch 1, umfassend ein Interdigitalelektrodensystem mit mindestens zwei kammartig ineinander greifenden Interdigitalelektroden und eine Trägerschicht, wobei das Interdigitalelektrodensystem auf der Trägerschicht angeordnet ist, das dadurch gekennzeichnet ist, dass sowohl mindestens eine Interdigitalelektrode als auch die Trägerschicht eine Profilstruktur aufweisen, hat den Vorteil, dass der Einfluss von Ascheablagerungen auf die Funktion des Sensors deutlich verringert und die Lebensdauer des Sensor deutlich erhöht wird.

Die vorliegende Erfindung beruht auf dem Prinzip, das isolierende Aschepartikel sich vorwiegend in den Zwischenräumen der Interdigitalelektrode irreversibel anlagern und somit über Lebensdauer die Ausbildung eines Sensorstroms proportional zur angelagerten Rußmasse auf dem Sensorelement verhindern. (Die Anlagerung von isolierenden Aschepartikeln erfolgt auf resistiven Partikelsensoren nach zwei unterschiedlichen Mechanismen.

Beim ersten Mechanismus liegt Asche an Rußpartikeln gebunden vor. Die elektrophoretische Anlagerung der Rußpartikel (inclusive Ascheanteile) erfolgt auf der Interdigitalelektrode bei Anlegen einer Spannung entlang der Feldlinien. Rußpfade bilden sich damit im Zwischenraum zweier Leiterbahnen aus. Der Einfluss der in Rußpfaden enthaltenen Ascheanteile auf die Signalbildung ist kurzfristig vernachlässigbar. Beim Rußabbrand (Regeneration des Sensors) bleibt die im Ruß enthaltene Asche jedoch als Verbrennungsrückstand auf dem Sensorelement zurück und akkumuliert sich über Lebensdauer zu grossen Teilen in den Elektrodenzwischenräumen. Neu entstehende Rußpfade müssen zur Signalbildung die isolierenden Ablagerungen überbrücken. Eine direkte, leitfähige Verbindung zwischen den Elektroden wird gehemmt.

Beim zweiten Mechanismus werden ungeladene Aschepartikel unabhängig vom elektrischen Feld der Interdigitalelektrode an zufälligen Orten auf dem Sensorelement über Diffussion abgeschieden. Der Anteil dieses Mechanismus am Gesamtaschenmenge ist vernachlässigbar.) Durch die erfindungsgemäße Profilstruktur der Trägerschicht und der Interdigitalelektroden werden die Bereiche, an denen die Ablagerung von hochohmigen Aschen schädlich für die Signalbildung/Sensorempfindlichkeit sind, wie die Oberfläche der Interdigitalelektroden, minimiert und die Bereiche, an denen die Ablagerung von hochohmigen Aschen die Signalbildung/Sensorempfindlichkeit nicht stört, maximiert, weshalb sich der Großteil der Aschepartikel in den Bereichen anlagert an denen die Ascheablagerung die Signalbildung/Sensorempfindlichkeit nicht stört. Dadurch kann eine hohe Sensorempfindlichkeit über die Lebensdauer des Sensorelementes selbst bei Ascheablagerungen sichergestellt werden.

Darüber hinaus wird durch die erfindungsgemäße Profilstruktur der Interdigitalelektroden beim Anlegen einer Spannung an die Elektroden eine Feldüberhöhung an Elektrodenspitzen erzeugt. Diese durch die Profilstruktur der Interdigitalelektroden erzeugte Feldüberhöhung ist deutlich stärker als eine in der Nähe eines Aschepartikels auftretenden Feldüberhöhung, sodass sich die leitfähigen Partikel durch elektrophoretische Abscheidung an den Elektrodenspitzen und nicht an Aschepartikeln anlagern. Auf Grund der geringen Oberfläche der Elektrodenspitzen wird zudem die Anlagerung von Aschepartikeln minimiert. Deshalb werden durch die erfindungsgemäße Profilstruktur der Interdigitalelektroden die Bereiche, an denen hauptsächlich die Partikelanlagerung stattfindet, von den Bereichen, an denen hauptsächlich die Aschanlagerung stattfindet, räumlich getrennt und eine gute Signalbildung und hohe Sensorempfindlichkeit selbst bei Ascheablagerungen über die Lebensdauer des Sensorelementes gewährleistet.

Ferner lässt sich die Empfindlichkeit eines Sensorelementes vorteilhafterweise durch eine erfindungsgemäße Profilstruktur der Interdigitalelektroden auf unterschiedliche Einsatzbereiche bzw. Grenzwertbereiche für die Überwachung von Dieselpartikelfiltern anpassen.

Weitere Vorteile und vorteilhafte Ausgestaltungen des erfindungsgemäßen Gegenstandes sind der Beschreibung, der Zeichnung und den Patentansprüchen zu entnehmen.

### Kurze Beschreibung der Zeichnungen

Die vorliegende Erfindung wird durch die im Folgenden gezeigten und diskutierten Figuren und die nachfolgende Beschreibung genauer erläutert. Dabei ist zu beachten, dass die Figuren nur beschreibenden Charakter haben und nicht dazu gedacht sind, die Erfindung in irgendeiner Form einzuschränken.
- Fig. 1: ist ein schematischer Querschnitt durch ein herkömmliches, resistives Sensorelement mit einem auf einer unstrukturierten, Trägerschicht angeordneten unstrukturierten Interdigitalelektrodensystem und veranschaulicht die Auswirkung eines Aschepartikels auf das elektrische Feld der Interdigitalelektroden des Interdigitalelektrodensystems;
- Fig. 2: ist ein Graph zur Veranschaulichung der Sensorfunktion eines resistiven Sensors in Abhängigkeit vom Ort einer Ascheablagerung;
- Fig. 3a: ist eine perspektivische Ansicht eines Grundkörpers aus dem ein erfindungsgemäßes Sensorelement mit einer erfindungsgemäß strukturierten Trägerschicht und erfindungsgemäß strukturierten Interdigitalelektroden durch ein erfindungsgemäßes Laserstrukturierungsverfahren hergestellt werden kann;
- Fig. 5: ist eine perspektivische Ansicht einer Ausführungsform eines erfindungsgemäßen Sensorelementes mit erfindungsgemäß strukturierten Interdigitalelektroden und einer erfindungsgemäß strukturierten Trägerschicht.

### Beschreibung der Abbildung

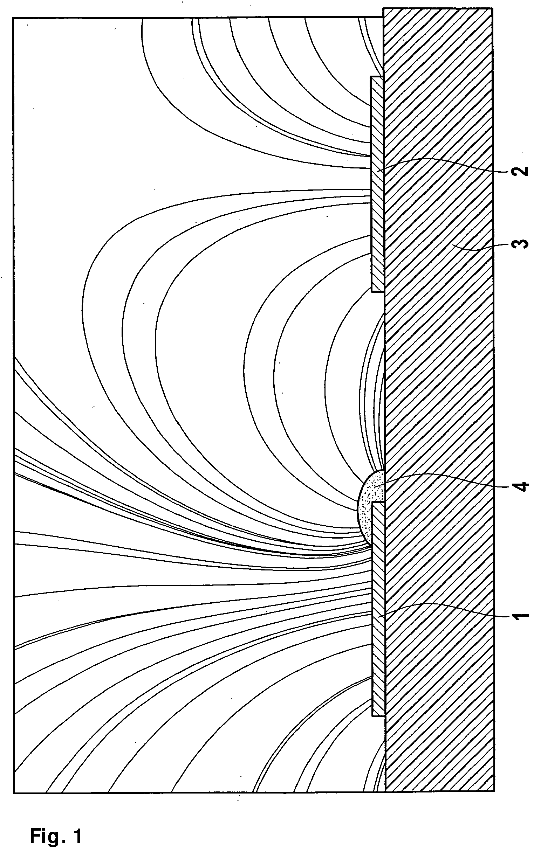

Fig. 1 zeigt einen schematischen Querschnitt durch ein herkömmliches, resistives Sensorelement zur Detektion von leitfähigen Partikel in einem Gasstrom, welches ein auf einer unstrukturierten (glatten, ebenen), Trägerschicht **3** angeordnetes Interdigitalelektrodensystem mit zwei kammartig ineinander greifenden, unstrukturierten Interdigitalelektroden **1, 2** umfasst. Am Rand der linken Interdigitalelektrode **1** mit einer Elektrodenarmbreite von 80 µm ist ein isolierender Aschepartikel mit einer typischen Dielektrizitätskonstante ε von 8 und einem Durchmesser von 30 µm angelagert. Darüber hinaus veranschaulicht Fig. 1 die Auswirkung des Aschepartikels **4** auf das elektrische Feld der zwei Interdigitalelektroden **1, 2** mit glatter Oberfläche. Fig. 1 zeigt, dass das Volumen über dem Sensorelement, aus dem Partikel durch das elektrische Feld (Elektrophorese) angezogen werden, annähernd unverändert bleibt. Hingegen wird das Nahfeld unmittelbar über der ersten Interdigitalelektrode **1,** auf der sich der Aschepartikel **4** befindet, insbesondere in einem Bereich von weniger als 30 µm Abstand zu dem Achspartikel 4, durch den Aschepartikel **4** stark beeinflusst und steuert den Ort der Ablagerung von leitfähigen Partikeln in seiner unmittelbaren Nähe. Dadurch kommt es zu einer Fokussierung von angelagerten, leitfähigen Partikel in unmittelbarer Nähe des Aschepartikels **4** und zu einem büschelförmigen Wachstum der resultierenden, leitfähigen Partikelpfade. Aufgrund der isolierenden Eigenschaften des Aschepartikels, tragen diese über den isolierenden Aschepartikel mit den Interdigitalelektroden verbunden, leitfähigen Partikelpfade viel geringer zum Sensorstrom und damit zum Sensorsignal bei, als dies bei einem direkten Kontakt eines leitfähigen Partikelpfads mit den Interdigitalelektroden der Fall wäre.

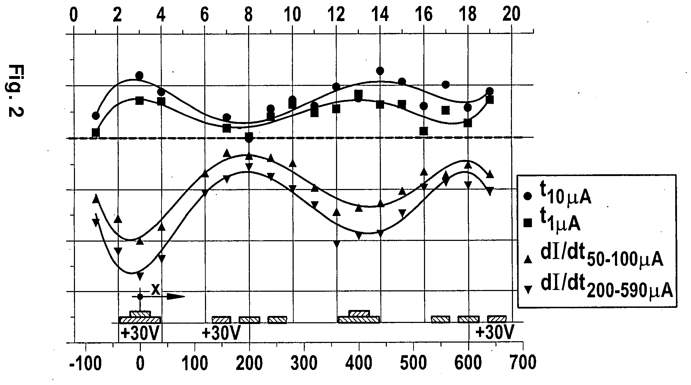

Fig. 2 zeigt einen Graphen zur Veranschaulichung der Sensorfunktion eines-resistiven Sensors in Abhängigkeit vom Ort einer Ascheablagerung. In dem in Fig. 2 gezeigten Graphen werden Messergebnisse einer Serie von resistiven Sensorelementen dargestellt. Alle untersuchten Sensorelemente umfassen ein auf einer unstrukturierten, Trägerschicht angeordnetes Interdigitälelektrodensystem, indem eine erste und eine zweite unstrukturierte Interdigitalelektrode kammartig ineinander greifen. Dabei betrug die Breite der Elektrodenarme der Interdigitalelektroden 200 µm und der Abstand zwischen den Elektrodenarmen der Interdigitalelektroden 200 µm. Um eine Ascheablagerung zu simulieren wurde auf und/oder neben jeden zweiten Elektrodenarm (das heißt auf und/oder neben jeden Elektrodenarm einer der beiden Interdigitalelektroden) ein 80 bis 100 µm breiter Streifen aus einem hochohmigen Material angeordnet. Im Rahmen der hier gezeigten Versuchsreihe wurde exemplarisch Aluminiumoxid als hochohmiges Material verwendet, um eine hochohmige Asche zu simulieren. Dabei unterscheiden sich die untersuchten Sensorelemente dadurch, dass die Position der hochohmigen Streifen von Sensorelement zu Sensorelement um jeweils 50 µm verschoben ist.

Beispielsweise sind bei dem Sensorelement Nr. 3 die hochohmigen Streifen mittig auf den Elektrodenarmen der ersten Interdigitalelektrode angeordnet. Im Fall von Sensorelement Nr. 4 sind die hochohmigen Streifen zur Hälfte auf den Elektrodenarmen der ersten Interdigitalelektrode und zur anderen Hälfte auf der Trägerschicht angeordnet. Bei dem Sensorelement Nr. 8 sind die hochohmigen Streifen hingegen mittig zwischen den Elektrodenarmen der ersten und zweiten Interdigitalelektrode angeordnet.

Im Fall der Sensorelemente Nr. 1 bis 20 wurde an die erste Interdigitalelektrode eine Spannung von +30 V angelegt, wobei die zweite Interdigitalelektrode geerdert wurde.

Die durch Kreisflächen und Quadrate gekennzeichneten Werte geben die Änderung der Auslösezeit t des jeweiligen Sensorelementes im Bezug auf ein Sensorelement ohne hochohmige Schicht (Sollwert, in Fig. 2 durch gestrichelte Linien gekennzeichnet) für zwei Stromschwellwerte wieder. Der Stromschwellwert betrug bei den durch Kreisflächen gekennzeichneten Werten 10 µA und bei den durch Quadrate gekennzeichneten Werten 1 µA. Die Auslösezeit t gibt dabei den Einfluss des Ascheablagerungsortes auf die Ausbildung erster geschlossener Rußpfade und der damit verbundenen Signalbildung bis zu der angegebenen Stromschwelle wieder.

Die durch Dreiecke gekennzeichneten Werte zeigen die Abweichung der zeitlichen Ableitung des Stromflusses (dI/dt) des jeweiligen Sensorelementes im Bezug auf ein Sensorelement ohne hochohmige Schicht (Sollwert, in Fig. 2 durch gestrichelte Linien gekennzeichnet) für zwei dI/dt-Stromintervalle. Das dI/dt-Stromintervall betrug bei den Werten, die durch Dreiecke mit aufwärts zeigender Spitze gekennzeichneten sind, 50 bis 100 µA und bei den Werten, die durch Dreiecke mit abwärts zeigender Spitze gekennzeichnet sind, 200 bis 590 µA. Die zeitliche Ableitung des Stromflusses (dI/dt) gibt dabei den Einfluss des Ascheablagerungsortes auf die Leitfähigkeit des Sensorelementes und der darauf abgelagerten leitfähigen Partikel wieder.

Fig. 2 zeigt, dass der durch hochohmiges Material (Asche) bedingte Empfindlichkeitseinbruch eines Partikelsensors stark von dem Ort der des hochohmigen Materials (Ascheablagerung) auf dem Sensorelement abhängt. Fig. 2 zeigt, dass wenn hochohmiges Material an den Positionen 0µm und 400 µm auf der x-Achse, das heißt mittig auf den Elektrodenarmen einer Interdigitalelektrode, die mit +30 V beschaltet sind, angeordnet ist, der Empfindlichkeitseinbruch eines Sensorelementes am stärksten ist. Dies liegt darin begründet, dass an denjenigen Stellen an denen sich hochohmiges Material auf den Interdigitalelektroden befindet, eine durch angelagerte leitfähige Partikel bedingte Stromleitung zwischen den Elektroden auf Grund des elektrischen Widerstands des hochohmigen Materials kein Sensorsignal liefern kann, welches einem Sensorsignal ohne hochohmiges Material gleichwertig ist. Zwischen den Elektrodenarmen der Interdigitalelektroden befindliches hochohmiges Material, trägt hingegen nur geringfügig zu einem Empfindlichkeitseinbruch eines Sensorelementes bei.

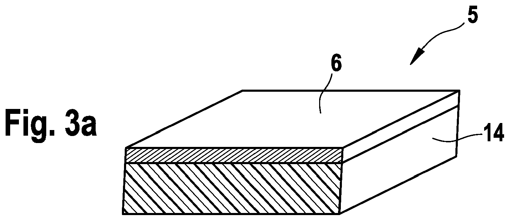

Fig. 3a ist eine perspektivische Ansicht eines Grundkörpers **5** aus dem ein erfindungsgemäßes Sensorelement **10** mit einer erfindungsgemäß strukturierten Trägerschicht **14** und erfindungsgemäß strukturierten Interdigitalelektroden **12, 13** durch ein erfindungsgemäßes Laserstrukturierungsverfahren hergestellt werden kann. Dieser Grundkörper umfasst eine ebene, unstrukturierte Platinschicht **6,** die auf einer ebenen, unstrukturierten Trägerschicht **14** angeordnet ist.

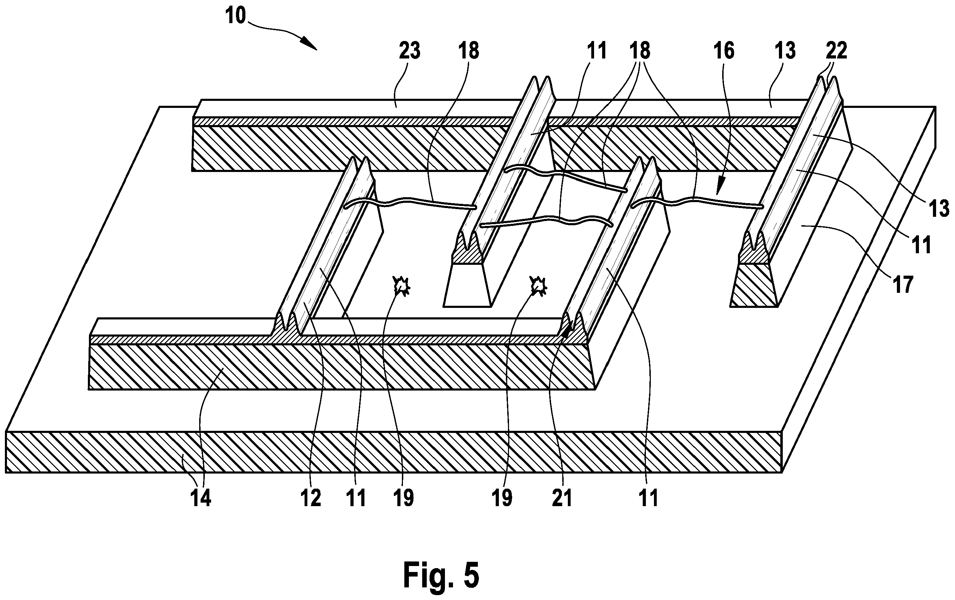

Fig. 5 ist eine perspektivische Ansicht einer Ausführungsform eines erfindungsgemäßen Sensorelementes **10** mit einem Interdigitalelektrodensystem **12, 13,** in dem zwei erfindungsgemäß strukturierte Interdigitalelektroden **12, 13** kammartig ineinander greifen und mit einer erfindungsgemäß strukturierten, Trägerschicht **14** auf der das Interdigitalelektrodensystem **12, 13** angeordnet ist. Im Rahmen dieser Ausführungsform weist die Trägerschicht mindestens eine grabenähnliche Ausnehmung **16** auf, die derart mäanderähnlich im Bereich zwischen den Interdigitalelektroden **12, 13** des Interdigitalelektrodensystems **12, 13** ausgebildet ist, dass die Interdigitalelektroden **12, 13** bezüglich des zwischen den Interdigitalelektroden befindlichen Bereichs der Trägerschicht erhöht angeordnet sind. Wie in Fig. 5 gezeigt, kann die Trägerschicht **14** darüber hinaus auch im Bereich außerhalb des Interdigitalelektrodensystems **12, 13** ausgenommen sein. Mit anderen Worten, die Trägerschicht **14** kann im Rahmen der vorliegenden Erfindung an denjenigen Stellen, an denen keine Interdigitalelektroden **12, 13** auf der Trägerschicht **14** angeordnet sind, eine oder mehrere grabenähnliche Ausnehmungen **16** aufweisen, die dazu führt/führen, dass die Interdigitalelektroden **12, 13** auf erhöhten Stegen **17** der Trägerschicht **14** angeordnet sind.

Darüber hinaus verdeutlicht Fig. 5, dass die Elektrodenarme und Kammrücken der Interdigitalelektroden **12, 13** im Rahmen der vorliegenden Erfindung unabhängig voneinander strukturiert oder auch nicht strukturiert werden können. Im Rahmen der in Fig. 5 gezeigten erfindungsgemäßen Ausgestaltung weisen nur die Elektrodenarme **11** der Interdigitalelektroden **12, 13** eine Profilstruktur **21, 22** durch parallel zu den Elektrodenarmen **11** der Interdigitalelektroden **12, 13** verlaufende grabenähnliche Ausnehmungen **21** und steg/wellen/damm-ähnliche Erhebungen **22** auf, wohingegen die Kammrücken **23** der Interdigitalelektroden **12, 13** unstrukturiert sind. Wie bereits erläutert, können im Rahmen anderer erfindungsgemäßer Ausgestaltungen auch die Kammrücken **23** bzw. nur die Kammrücken **23** eine Profilstruktur **21, 22** aufweisen. Eine derartige Profilstruktur der Interdigitalelektroden **12, 13** und der Trägerschicht **14** hat im Messbetrieb neben der bereits erläuterten Feldüberhöhung an den Elektrodenspitzen der Interdigitalelektroden **12, 13** und der daraus resultierenden hohe Anlagerungswahrscheinlichkeit von leitfähigen Partikel an den Elektrodenspitzen der Interdigitalelektroden **12, 13,** eine hohe Anlagerungswahrscheinlichkeit von Aschepartikel **19** in den Ausnehmungen **16** in der Trägerschicht **14** und das Ausbilden von stehenden, leitfähigen Partikelpfadstrukturen **18** zwischen den Interdigitalelektroden **12, 13** zur Folge. Bei einem erfindungsgemäßen Sensorelement wird daher der Einfluss von Ascheablagerungen auf die Funktion des Sensorelementes deutlich verringert und die Lebensdauer des Sensorelementes deutlich erhöht.

Gegenstand der vorliegenden Erfindung ist Sensorelement zur Detektion von leitfähigen Partikel in einem Gasstrom, umfassend ein Interdigitalelektrodensystem mit mindestens zwei kammartig ineinander greifenden Interdigitalelektroden und einer Trägerschicht, wobei das Interdigitalelektrodensystem auf der Trägerschicht angeordnet ist, das dadurch gekennzeichnet ist, dass mindestens eine Interdigitalelektrode eine Profilstruktur aufweist.

Die erfindungsgemäße Profilstruktur der Trägerschicht und der mindestens einen Interdigitalelektrode kann im Sinn der vorliegenden Erfindung auch als Profilierung oder Strukturierung, insbesondere Tiefenstrukturierung, verstanden werden.

Unter dem Begriff "Partikel" werden im Sinn der vorliegenden Erfindung leitfähige Partikel, insbesondere Rußpartikel, beispielsweise halbleitende Kohlenstoffpartikel, verstanden.

Die Profilstruktur der Interdigitalelektrode/n ist dabei durch mindestens eine grabenähnliche Ausnehmung in der/den Interdigitalelektrode/n ausgebildet.

Dabei soll die Verwendung des Begriffs "Ausnehmung" im Zusammenhang mit der Beschreibung einer erfindungsgemäßen Profilstruktur nicht dahingehend ausgelegt werden, dass eine erfindungsgemäße Profilstruktur nur durch das Abtragen von Material aus einer Schicht hergestellt werden kann. Eine erfindungsgemäße Profilstruktur kann ebenso durch das Auftragen von Material und die damit verbundene Ausbildung von erhöhten Bereichen, wie Stegen, Dämmen, Wellen oder Kegeln, und nicht erhöhten Bereichen beschrieben werden.

Die grabenähnliche/n Ausnehmung/en in der/den Interdigitalelektrode/n können parallel und/oder senkrecht zu den Elektrodenarmen und/oder Kammrücken der Interdigitalelektroden angeordnet sein. Beispielsweise kann die erfindungsgemäße Profilstruktur der Interdigitalelektrode/n derart ausgebildet werden, dass die Elektrodenarme und/oder Kammrücken der Interdigitalelektrode/n jeweils mindestens eine grabenähnliche Ausnehmung aufweisen, die parallel und/oder senkrecht zu dem jeweiligen Elektrodenarm oder Kammrücken angeordnet ist. Aus dieser/n grabenähnliche/n Ausnehmung/en resultieren Erhebungen, die beispielsweise in Form eines Stegs, einer Welle, eines Damms, eines Bergs, eines Bergplateaus oder eines Kegels ausgebildet sein können. Diese Erhebungen/Spitzen auf den Elektrodenarmen oder dem Kammrücken verstärken die Empfindlichkeit des Sensorelementes durch Feldüberhöhungen an den Erhebungen/Spitzen und verbessern aufgrund ihrer Geometrie die Resistenz des Sensorelementes gegenüber isolierenden Ablagerungen.

Beispielsweise kann die erfindungsgemäße Profilstruktur der Interdigitalelektrode/n derart ausgebildet werden, dass die Elektrodenarme und/oder Kammrücken der Interdigitalelektrode/n jeweils eine mittige, grabenähnliche Ausnehmung aufweisen, die parallel zu dem jeweiligen Elektrodenarm oder Kammrücken angeordnet ist. Dadurch werden jeweils zwei, parallel zu einander verlaufende Stege/Dämme/Wellen ausgebildet, die über eine gemeinsame Grundfläche miteinander verbunden sind.

Die Profilstruktur der Interdigitalelektrode/n kann im Rahmen der vorliegenden Erfindung auch derart ausgebildet werden, dass die Interdigitalelektrode/n mindestens zwei, beispielsweise mindestens drei oder vier, grabenähnliche Ausnehmung aufweisen. Beispielsweise können die Elektrodenarme und/oder Kammrücken der Interdigitalelektrode/n jeweils mindestens zwei, beispielsweise mindestens drei oder vier, grabenähnliche Ausnehmungen aufweisen, die parallel und/oder senkrecht zu dem jeweiligen Elektrodenarm oder Kammrücken angeordnet sind. Durch parallel oder senkrecht zu dem jeweiligen Elektrodenarme oder Kammrücken angeordnete grabenähnliche Ausnehmungen in den Elektrodenarmen und/oder Kammrücken, werden jeweils mehrere, parallel zu einander verlaufende Stege/Dämme/Wellen ausgebildet, die über eine gemeinsame Grundfläche miteinander verbunden sind. Beispielsweise können die Elektrodenarme und/oder Kammrücken der Interdigitalelektroden dadurch jeweils zwei, drei vier oder fünf parallel zueinander und parallel zu dem jeweiligen Elektrodenarm oder Kammrücken verlaufende, steg/wellen/damm-ähnliche Erhebungen aufweisen, die über eine gemeinsame Grundfläche miteinander verbunden sind.

Im Rahmen einer Ausgestaltung der Erfindung weisen die Elektrodenarme und/oder Kammrücken der Interdigitalelektrode/n jeweils mehrere grabenähnliche Ausnehmungen auf, die parallel und senkrecht zu dem jeweiligen Elektrodenarm oder Kammrücken angeordnet sind. Aus diesen parallelen und senkrechten grabenähnlichen Ausnehmungen in den Elektrodenarmen und/oder Kammrücken resultiert eine Vielzahl von berg/bergplateau/kegel-ähnlichen Erhebungen in den Elektrodenarmen und/oder Kammrücken, die über eine gemeinsame Grundfläche miteinander verbunden sind.

Im Rahmen einer weiteren Ausgestaltung der Erfindung weisen die Elektrodenarme und/oder Kammrücken der Interdigitalelektrode jeweils eine mittige, grabenähnliche Ausnehmung, die parallel zu dem jeweiligen Elektrodenarm oder Kammrücken angeordnet ist, auf. Eine derartige Ausgestaltung hat sich als vorteilhaft erwiesen, da hierdurch die durch die Teilchen zu überbrückenden Abstände minimiert werden können.

Im Rahmen einer weiteren Ausgestaltung der Erfindung sind die grabenähnliche/n Ausnehmung/en der/den Interdigitalelektrode/n, beispielsweise in den in den Elektrodenarmen und Kammrücken der Interdigitalelektroden, senkrecht zur Richtung des Gasstroms angeordnet. Dies hat den Vorteil, dass hierdurch eine maximale Beruhigung der Gasströmung erzielt werden kann.

Neben den Interdigitalelektroden weist im Rahmen der vorliegenden Erfindung auch die Trägerschicht eine Profilstruktur auf. Vorzugsweise sind die Trägerschicht und die Interdigitalelektrode/n derart profilstrukturiert/profiliert/strukturiert, dass die Interdigitalelektroden im Bezug auf die Grundfläche der Ausnehmungen in der Trägerschicht räumlich erhöht auf neben den Ausnehmungen angeordneten Stegen der Trägerschicht angeordnet sind.

Die Profilstruktur der Trägerschicht ist erfindungsgemäß durch mindestens eine grabenähnliche Ausnehmung in der Trägerschicht ausgebildet.

Die grabenähnliche/n Ausnehmung/en in der Trägerschicht sind beispielsweise parallel zu den Leiterbahnen der Interdigitalelektroden angeordnet, wobei die Leiterbahn einer Interdigitalelektrode die Elektrodenarme und den Kammrücken der Interdigitalelektrode umfasst. Beispielsweise kann die Trägerschicht erfindungsgemäß mindestens eine grabenähnliche, zu den Leiterbahnen der Interdigitalelektroden parallele Ausnehmung aufweisen, die derart ausgebildet ist, dass die Ausnehmung im Bereich zwischen den Interdigitalelektroden des Interdigitalelektrodensystems eine mäanderähnliche, den Leiterbahnen der Interdigitalelektroden parallel folgende Form aufweist. Dies hat zur Folge, dass die Interdigitalelektroden bezüglich des zwischen den Interdigitalelektroden befindlichen Bereichs der Trägerschicht erhöht angeordnet sind.

Darüber hinaus kann die Trägerschicht auch in dem Bereich außerhalb der von den Interdigitalelektroden bedeckten Fläche ausgenommen sein. Mit anderen Worten, die Profilstruktur der Trägerschicht derart ausgebildet sein, dass die Trägerschicht an denjenigen Stellen, an denen keine Interdigitalelektroden auf der Trägerschicht angeordnet sind, eine oder mehrere grabenähnliche Ausnehmung/en aufweist. Dass die Trägerschicht an denjenigen Stellen, an denen keine Interdigitalelektroden auf der Trägerschicht angeordnet sind, eine oder mehrere grabenähnliche Ausnehmung/en aufweist, hat zur Folge, dass die Interdigitalelektroden auf Trägerschichtstegen angeordnet sind, die aus der/den Ausnehmung/en resultieren.

Die Ausgestaltung von grabenähnlichen Ausnehmungen in der Trägerschicht, die parallel zu den Leiterbahnen der Interdigitalelektrode angeordnet sind, bietet bei einer Herstellung durch ein erfindungsgemäßes Laserstrukturierungsverfahren vorteilhafterweise eine große Fertigungstoleranz.

Vorzugsweise isbsind die erfindungsgemäßen grabenähnliche/n Ausnehmung/en in der/den Interdigitalelektrode/n und/oder in der Trägerschicht derart ausgebildet, dass diese eine halbrunde, wellenähnliche, dreieckähnliche, viereckähnliche - insbesondere trapezähnliche, rechtseckähnliche, quadratähnliche - fünfeckähnliche und/oder sechseckähnliche Querschnittsform - insbesondere Querschnittfläche - aufweist/aufweisen.

Vorzugsweise weist/weisen die grabenähnliche/n Ausnehmung/en in der/den Interdigitalelektrode/n eine Tiefe von ≥ 1 µm bis ≤ 200 µm, beispielsweise von ≥ 2 µm bis ≤ 120 µm, insbesondere von ≥ 4 µm bis ≤ 100 µm, und/oder eine Breite von ≥ 20 µm bis ≤ 100 µm, beispielsweise von ≥ 50 µm bis ≤ 90 µm, insbesondere von ≥ 60 µm bis ≤ 80 µm, auf. Wenn die grabenähnliche/n Ausnehmung/en senkrecht zu den Elektrodenarmen oder Kammrücken angeordnet ist/sind, weist/weisen die grabenähnliche/n Ausnehmung/en in der/den Interdigitalelektrode/n eine Länge von ≥ 20 µm bis ≤ 100 µm, beispielsweise von ≥ 50 µm bis ≤ 90 µm, insbesondere von ≥ 60 µm bis ≤ 80 µm, auf. Wenn die grabenähnliche/n Ausnehmung/en parallel zu den Elektrodenarmen oder Kammrücken angeordnet ist/sind, weist/weisen die grabenähnliche/n Ausnehmung/en in der/den Interdigitalelektrode/n eine Länge von ≥ 20 µm bis ≤ 15 mm, beispielsweise von ≥ 10 µm bis ≤ 10 mm, insbesondere von ≥ 10 µm bis ≤ 7 mm, auf.

Die Elektrodenarme und/oder der Kammrücken der Interdigitalelektroden können eine Breite von ≥ 20 µm bis ≤ 500 µm, beispielsweise von ≥ 50 µm bis ≤ 300 µm, insbesondere von ≥ 80 µm bis ≤ 200 µm, und/oder eine Höhe (Dicke) von ≥ 20 µm bis ≤ 500 µm, beispielsweise von ≥ 50 µm bis ≤ 300 µm, insbesondere von ≥ 80 µm bis ≤ 200 µm, und/oder eine Länge von ≥ 20 µm bis ≤ 500 µm, beispielsweise von ≥ 50 µm bis ≤ 300 µm, insbesondere von ≥ 80 µm bis ≤ 200 µm, aufweisen. Der Abstand zwischen benachbarten Elektrodenarmen in einem Interdigitalelektrodensystem mit mindestens zwei kammartig ineinander greifenden Interdigitalelektroden kann von ≥ 10 µm bis ≤ 500 µm, beispielsweise von ≥ 15 µm bis ≤ 300 µm, insbesondere von ≥ 20 µm bis ≤ 200 µm, betragen.

Die Interdigitalelektroden können erfindungsgemäß ein Metall oder eine Metalllegierung, ausgewählt aus der Gruppe umfassend Platin, Kupfer, Silber, Gold, Eisen, Cobalt, Nickel, Palladium, Ruthenium, Iridium und/oder Rhodium, umfassen. Vorzugsweise umfassen die Interdigitalelektroden Platin.

Die grabenähnliche/n Ausnehmung/en in der Trägerschicht weist/weisen vorzugsweise eine Tiefe von ≥ 30 µm bis ≥ 500 µm, beispielsweise von ≥ 50 µm bis ≤ 200 µm, insbesondere von ≥ 80 µm bis ≤ 150 µm, und/oder eine Breite von ≥ 30 µm bis ≤ 500 µm, beispielsweise von ≥ 80 µm bis ≤ 200 µm, insbesondere von ≥ 100 µm bis ≤ 150 µm, und/oder eine Länge von ≤ 10 µm bis ≤ 10 mm, beispielsweise von ≥ 20 µm bis ≤ 7 mm, insbesondere von ≥ 30 µm bis ≤ 5 mm, auf.

Die Trägerschicht basiert im Rahmen der vorliegenden Erfindung vorzugsweise auf einem keramischen Material, wie Aluminiumoxid und/oder Zirkoniumoxid (beispielsweise yttriumstabilisertes Zirkoniumoxid), oder einem Glas. Dabei kann es sich bei einer erfindungsgemäßen Trägerschicht auch um einen geschichteten Werkstoffverbund handeln, der zwei oder mehr Schichten unterschiedlicher Zusammensetzung, Dicke und/oder Materials umfasst. Beispielsweise kann es sich bei der Trägerschicht um einen Werkstoffverbund handeln, der eine auf einer Zirkoniumoxidschicht angeordnete Aluminiumoxidschicht umfasst. Insofern eine elektrisch isolierende Eigenschaft der mit dem Interdigitalelektrodensystems in Kontakt stehenden Trägerschicht erwünscht ist, kann die Trägerschicht eine Aluminiumoxidschicht oder ein Werkstoffverbundschicht, mit einer Aluminiumoxidschicht auf der dem Interdigitalelektrodensystem zugewandten Seite, sein.

Ein weiterer Gegenstand der vorliegenden Erfindung ist ein Sensor zur Detektion von leitfähigen Partikel in einem Gasstrom, der dadurch gekennzeichnet ist, dass der Sensor ein erfindungsgemäßes Sensorelement umfasst.

Ein weiterer Gegenstand der vorliegenden Erfindung ist ein Verfahren zur Herstellung eines erfindungsgemäßen Sensorelementes gemäß Anspruch 7, indem
- durch ein Laserstrukturierungsverfahren von einem Grundkörper, der eine auf einer ebenen Trägerschicht (14) angeordnete ebene Metallschichtschicht (6) umfasst, derart Material abgetragen wird, dass aus der Metallschicht (6) ein Interdigitalelektrodensystem (12 , 13) mit mindestens zwei kammartig ineinander greifenden Interdigitalelektroden (12, 13) ausgebildet wird und sowohl in mindestens eine der Interdigitalelektroden (12, 13) als auch in die Trägerschicht (14) eine Profilstruktur (21, 22; 16, 17) eingebracht wird; oder
- durch ein Siebdruckverfahren mit mehreren Siebdruckschritten auf eine Trägerschicht (14) eine Profilstruktur (16, 17) aus dem Material der Trägerschicht (14) aufgedruckt wird und auf diese Profilstruktur (16, 17) der Trägerschicht (14) wiederum ein Interdigitalelektrodensystem mit mindestens zwei kammartig ineinander greifenden Interdigitalelektroden (12, 13) derart aufgedruckt wird, dass mindestens eine der Interdigitalelektroden (12, 13) eine Profilstruktur (21, 22) aufweist.

Ein weiterer Gegenstand der vorliegenden Erfindung ist ein Verfahren zur Herstellung eines erfindungsgemäßen Sensorelementes gemäß Anspruch 8, indem
- in einem ersten Verfahrensschritt durch ein Siebdruckverfahren mit mehreren Siebdruckschritten auf eine Trägerschicht eine Profilstruktur aus dem Material der Trägerschicht aufgedruckt wird und auf diese Profilstruktur der Trägerschicht wiederum ein Interdigitalelektrodensystem mit mindestens zwei kammartig ineinander greifenden Interdigitalelektroden aufgedruckt wird; und
- in einem zweiten Verfahrensschritt durch ein Laserstrukturierungsverfahren derart Material von den Interdigitalelektroden abgetragen, dass in mindestens eine der Interdigitalelektroden eine Profilstruktur eingebracht wird.

Die Trägerschicht kann, wie bereits im Zusammenhang mit dem erfindungsgemäßen Sensorelement erläutert auf einem keramischen Material, wie Aluminiumoxid und/oder Zirkoniumoxid, beispielsweise yttriumstabilisertes Zirkoniumoxid, oder einem Glas oder einem geschichteten Werkstoffverbund basieren. Die Trägerschicht weist vorzugsweise eine Dicke von ≥ 10 µm bis ≤ 500 µm, beispielsweise von ≥ 10 µm bis ≤ 200 µm, insbesondere von ≥ 10 µm bis ≤ 20 µm, auf.

Die Metallschicht kann ein Metall oder eine Metalllegierung, ausgewählt aus der Gruppe umfassend Platin, Kupfer, Silber, Gold, Eisen, Cobalt, Nickel, Palladium, Ruthenium, Iridium und/oder Rhodium, umfassen. Vorzugsweise umfasst die Metallschicht Platin. Die Metallschicht weist vorzugsweise eine Dicke von ≥ 5 µm bis ≤ 200 µm, beispielsweise von ≥ 5 µm bis ≤ 10 µm, insbesondere von ≥ 5 µm bis ≤ 7 µm, auf.

Im Rahmen des Laserstrukturierungsverfahrens kann die Trägerschicht und/oder Metallschicht mit einem Laser nach einer Vorlage abgerastert werden. Durch eine Anpassung der Abtragsparameter des Laserstrukturierungsprozesses kann in einer Laserstrukturierungsanlage eine erfindungsgemäße Profilstruktur sowohl in der Trägerschicht als auch in der/den Interdigitalelektrode/n ausgebildet werden. Nachdem in einem ersten Bearbeitungsschritt, bei dem bereits Teile der Metallschicht und der Trägerschicht abgetragen und eine Profilstruktur in der Trägerschicht ausgebildet wurde, können in einem zweiten Bearbeitungsschritt die Profilstruktur der Trägerschicht und die verbliebenen Metallschichtbereiche abgerastet werden und in einem dritten Bearbeitungsschritt die verbliebenen Metallschichtbereiche mit dem gleichen Laser, jedoch mit angepassten Abtragsparametern (beispielsweise einer modulierten Laserintensität), profilstrukturiert/profiliert/strukturiert werden.

Für den Einsatz in einem erfindungsgemäßen Verfahren sind beispielsweise Festköperlaser oder Excimerlaser, beispielsweise Neodym-YAG-Laser oder Faserlaser oder Diodenlaser, geeignet. Die Wellenlänge des Lasers liegt in einem Bereich zwischen dem Infrarot- und dem UV-Bereich. Die mittlere Leistung des Lasers liegt beispielsweise in einem Bereich von ≥ 0,1 W bis ≤ 100 W. Die für den erfindungsgemäßen Einsatz geeigneten Laserpulsdauern liegen in einem Bereich von ≥ 100 ps bis ≤ 100 ns. Zweckmäßigerweise liegt der Fokusdurchmesser des Lasers in einem Bereich von ≥ 1 µm bis ≤ 100 µm.

Ein weiterer Gegenstand gemäß Anspruch 9 der vorliegenden Erfindung ist die Verwendung eines erfindungsgemäßen Sensorelementes und/oder eines erfindungsgemäßen Sensors in einem Werkstattmessgerät zur Abgasuntersuchung oder in einem Messgerät zur Kontrolle der Luftqualität oder zur Überwachung der Betriebsweise eines Verbrennungsmotors, beispielsweise eines Dieselmotors, oder einer Verbrennungsanlage, beispielsweise einer Ölheizung, oder zur Überwachung der Funktionsfähigkeit eines Partikelfilters und/oder des Beladungszustandes eines Partikelfilters oder zur Überwachung von chemischen Herstellungsprozessen, Abluftanlagen und/oder Abluftnachbehandlungsanlagen.

## Patentansprüche

1. Sensorelement (10) zur Detektion von leitfähigen Partikeln in einem Gasstrom, umfassend
- ein Interdigitalelektrodensystem mit mindestens zwei kammartig ineinander greifenden Interdigitalelektroden (12, 13) und
- einer Trägerschicht (14), wobei das Interdigitalelektrodensystem (12, 13) auf der Trägerschicht (14) angeordnet ist,
**dadurch gekennzeichnet,**
**dass** mindestens eine Interdigitalelektrode (12, 13) eine Profilstruktur (21, 22) aufweist, die durch mindestens eine grabenähnliche Ausnehmung (21) in der/den Interdigitalelektrode/n (12, 13) selbst ausgebildet ist und dass die Trägerschicht (14) eine Profilstruktur (16, 17) aufweist, die durch mindestens eine grabenähnliche Ausnehmung (16) in der Trägerschicht (14) ausgebildet wird.

2. Sensorelement (10) nach Anspruch 1, **dadurch gekennzeichnet, dass** die grabenähnliche/n Ausnehmung/en (21) in der/den Interdigitalelektrode/n (12, 13) parallel und/oder senkrecht zu Elektrodenarmen (11) und/oder Kammrücken (23) der Interdigitalelektroden (12, 13) angeordnet ist/sind.

3. Sensorelement (10) nach einem der vorherigen Ansprüche, **dadurch gekennzeichnet, dass** die grabenähnliche/n Ausnelimung/en (21) in der/den Interdigitalelektrode/n (12, 13) eine Tiefe von ≥ 1 µm bis ≤ 200 µm und/oder eine Breite von ≥ 20 µm bis ≤ 100 µm aufweist/aufweisen.

4. Sensorelement (10) nach einem der vorherigen Ansprüche, **dadurch gekennzeichnet, dass** die mindestens eine grabenähnliche, zu den Interdigitalelektroden (12, 13) parallele Ausnehmung (16) derart ausgebildet ist, dass die Ausnehmung (16) im Bereich zwischen den Interdigitalelektroden (12, 13) des Interdigitalelektrodensystems (12, 13) eine mäanderähnliche, den Leiterbahnen (11, 23) der Interdigitalelektroden (12, 13) parallel folgende Form aufweist.

5. Sensorelement (10) nach einem der vorherigen Ansprüche, **dadurch gekennzeichnet, dass** die grabenähnliche/n Ausnehmung/en (16) in der Trägerschicht eine Tiefe von ≥ 30 µm bis ≤ 500 µm und/oder eine Breite von ≥ 30 µm bis ≤ 500 µm und/oder eine Länge von ≥ 10 µm bis ≤ 10 mm aufweisen.

6. Sensorelement (10) nach einem der vorherigen Ansprüche, **dadurch gekennzeichnet, dass** grabenähnliche/n Ausnehmung/en (16, 21) in der/den Interdigitalelektrode/n (12, 13) und/oder in der Trägerschicht (14) derart ausgebildet ist/sind, dass diese eine halbrunde, wellenförmige, dreieckförmige, viereckförmige, fünfeckförmige und/oder sechseckförmige Querschnittsform aufweist/aufweisen.

7. Verfahren zur Herstellung eines Sensorelementes (10) nach einem der vorherigen Ansprüche, indem
- durch ein Laserstrukturierungsverfahren von einem Grundkörper, der eine auf einer ebenen Trägerschicht (14) angeordnete ebene Metallschichtschicht (6) umfasst, derart Material abgetragen wird, dass aus der Metallschicht (6) ein Interdigitalelektrodensystem (12, 13) mit mindestens zwei kammartig ineinander greifenden Interdigitalelektroden (12, 13) ausgebildet wird und sowohl in mindestens eine der Interdigitalelektroden (12, 13) als auch in die Trägerschicht (14) eine Profilstruktur (21, 22; 16, 17) eingebracht wird; oder
- durch ein Siebdruckverfahren mit mehreren Siebdruckschritten auf eine Trägerschicht (14) eine Profilstruktur (16, 17) aus dem Material der Trägerschicht (14) aufgedruckt wird und auf diese Profilstruktur (16, 17) der Trägerschicht (14) wiederum ein Interdigitalelektrodensystem mit mindestens zwei kammartig ineinander greifenden Interdigitalelektroden (12, 13) derart aufgedruckt wird, dass mindestens eine der Interdigitalelektroden (12, 13) eine Profilstruktur (21, 22) aufweist.

8. Verfahren zur Herstellung eines Sensorelementes (10) nach einem der Ansprüche 1 bis 6, indem
- in einem ersten Verfahrensschritt durch ein Siebdruckverfahren mit mehreren Siebdruckschritten auf die Trägerschicht (14) eine Profilstruktur (16, 17) aus dem Material der Trägerschicht (14) aufgedruckt wird und auf diese Profilstruktur (16, 17) der Trägerschicht (14) wiederum ein Interdigitalelektrodensystem (12, 13) mit mindestens zwei kammartig ineinander greifenden Interdigitalelektroden (12, 13) aufgedruckt wird; und
- in einem zweiten Verfahrensschritt durch ein Laserstrukturierungsverfahren derart Material von den Interdigitalelektroden (12, 13) abgetragen wird, dass in mindestens eine der Interdigitalelektroden (12, 13) eine Profilstruktur (21, 22) eingebracht wird.

9. Verwendung eines Sensorelementes (10) nach einem der Ansprüche 1 bis 6 in einem Werkstattmessgerät zur Abgasuntersuchung oder in einem Messgerät zur Kontrolle der Luftqualität oder zur Überwachung der Betriebsweise eines Verbrennungsmotors, beispielsweise eines Dieselmotors, oder einer Verbrennungsanlage, beispielsweise einer Ölheizung, oder zur Überwachung der Funktionsfähigkeit eines Partikelfilters und/oder des Beladungszustandes eines Partikelfilters oder zur Überwachung von chemischen Herstellungsprozessen, Abluftanlagen und/oder Abluftnachbehandlungsanlagen.

## Claims

1. Sensor element (10) for the detection of conductive particles in a gas flow, comprising
- an interdigital electrode system with at least two interdigital electrodes (12, 13) engaging in one another in a comb-like manner and
- a base layer (14), wherein the interdigital electrode system (12, 13) is arranged on the base layer (14),
**characterized**
**in that** at least one interdigital electrode (12, 13) has a profiled structure (21, 22), which is formed by at least one trench-like recess (21) in the interdigital electrode(s) (12, 13) itself/themselves and in that the base layer (14) has a profiled structure (16, 17), which is formed by at least one trench-like recess (16) in the base layer (14).

2. Sensor element (10) according to Claim 1, **characterized in that** the trench-like recess(es) (21) in the interdigital electrode(s) (12, 13) is/are arranged parallel and/or perpendicular to electrode arms (11) and/or comb backs (23) of the interdigital electrodes (12, 13).

3. Sensor element (10) according to one of the preceding claims, **characterized in that** the trench-like recess(es) (21) in the interdigital electrode(s) (12, 13) has/have a depth of ≥ 1 µm to ≤ 200 µm and/or a width of ≥ 20 µm to ≤ 100 µm.

4. Sensor element (10) according to one of the preceding claims, **characterized in that** the at least one trench-like recess (16) parallel to the interdigital electrodes (12, 13) is formed in such a way that the recess (16) has in the region between the interdigital electrodes (12, 13) of the interdigital electrode system (12, 13) a meander-like form, following the conductor tracks (11, 23) of the interdigital electrodes (12, 13) in a parallel manner.

5. Sensor element (10) according to one of the preceding claims, **characterized in that** the trench-like recess(es) (16) in the base layer have a depth of ≥ 30 µm to ≤ 500 µm and/or a width of ≥ 30 µm to ≤ 500 µm and/or a length of ≥ 10 µm to ≤ 10 mm.

6. Sensor element (10) according to one of the preceding claims, **characterized in that** trench-like recess (es) (16, 21) in the interdigital electrode(s) (12, 13) and/or in the base layer (14) is/are formed in such a way that it/they has/have a half-round, wave-shaped, triangular, rectangular, pentagonal and/or hexagonal cross-sectional form.

7. Method for producing a sensor element (10) according to one of the preceding claims, in that
- material is removed by a laser structuring process from a main body, which comprises a planar metal layer layer (6) arranged on a planar base layer (14), in such a way that an interdigital electrode system (12, 13) with at least two interdigital electrodes (12, 13) engaging in one another in a comb-like manner is formed from the metal layer (6) and a profiled structure (21, 22; 16, 17) is introduced both into at least one of the interdigital electrodes (12, 13) and into the base layer (14); or
- a profiled structure (16, 17) is printed by a screen-printing process comprising a number of screen-printing steps onto a base layer (14) from the material of the base layer (14) and an interdigital electrode system with at least two interdigital electrodes (12; 13) engaging in one-another in a comb-like manner is in turn printed onto this profiled structure (16, 17) of the base layer (14) in such a way that at least one of the interdigital electrodes (12, 13) has a profiled structure (21, 22).

8. Method for producing a sensor element (10) according to one of Claims 1 to 6, in that
- in a first method step, a profiled structure (16, 17) is printed by a screen-printing process comprising a number of screen-printing steps onto the base layer (14) from the material of the base layer (14) and an interdigital electrode system (12, 13) with at least two interdigital electrodes (12, 13) engaging in one another in a comb-like manner is in turn printed onto this profiled structure (16, 17) of the base layer (14); and
- in a second method step, material is removed by a laser structuring process from the interdigital electrodes (12, 13) in such a way that a profiled structure (21, 22) is introduced into at least one of the interdigital electrodes (12, 13).

9. Use of a sensor element (10) according to one of Claims 1 to 6 in a workshop measuring device for exhaust gas investigation or in a measuring device for checking air quality or for monitoring the operation of an internal combustion engine, for example a diesel engine, or a combustion system, for example an oil heater, or for monitoring the functional capability of a particle filter and/or the charging state of a particle filter or for monitoring chemical production processes, exhaust air systems and/or exhaust air aftertreatment systems.

## Revendications

1. Elément détecteur (10) pour la détection de particules conductrices dans un flux gazeux, comprenant
- un système d'électrodes interdigitées comportant au moins deux électrodes interdigitées (12, 13) en forme de peignes imbriqués et
- une couche de support (14), dans lequel le système d'électrodes interdigitées (12, 13) est disposé sur la couche de support (14),
**caractérisé en ce qu'**au moins une électrode interdigitée (12, 13) présente une structure profilée (21, 22) qui est elle-même réalisée par au moins un évidement (21) en forme de tranchée dans l'électrode ou les électrode(s) interdigitée(s) (12, 13) et **en ce que** la couche de support (14) présente une structure profilée (16, 17) qui est réalisée par au moins un évidement (16) en forme de tranchée dans la couche de support (14).

2. Elément détecteur (10) selon la revendication 1, **caractérisé en ce que** le/les évidement (s) (21) en forme de tranchée(s) est/sont disposé(s) dans l'électrode ou les électrodes interdigitée(s) (12, 13) parallèlement et/ou perpendiculairement à des bras d'électrodes (11) et/ou des dos de peignes (23) des électrodes interdigitées (12, 23).

3. Elément détecteur (10) selon l'une quelconque des revendications précédentes, **caractérisé en ce que** le/les évidement(s) (21) en forme de tranchée(s) présente/présentent dans l'électrode ou les électrodes interdigitée(s) (12, 13) une profondeur de ≥ 1 µm à ≤ 200 µm et/ou une largeur de ≥ 20 µm à ≤ 100 µm.

4. Elément détecteur (10) selon l'une quelconque des revendications précédentes, **caractérisé en ce que** l'au moins un évidement (16) en forme de tranchée parallèle aux électrodes interdigitées (12, 13) est réalisé de manière à ce que l'évidement (16), dans la zone située entre les électrodes interdigitées (12, 13) du système d'électrodes interdigitées (12, 13) présente une forme sinueuse suivant parallèlement les pistes conductrices (11, 23) des électrodes interdigitées (12, 13).

5. Elément détecteur (10) selon l'une quelconque des revendications précédentes, **caractérisé en ce que** l'évidement ou les évidements (16) en forme de tranchée(s) présente/présentent dans la couche de support une profondeur de ≥ 30 µm à ≤ 500 µm et/ou une largeur de ≥ 30 µm à ≤ 500 µm et/ou une longueur de ≥ 10 µm à ≤ 10 mm.

6. Elément détecteur (10) selon l'une quelconque des revendications précédentes, **caractérisé en ce que** l'évidement ou les évidements (16, 21) en forme de tranchée(s) est/sont réalisé(s) dans la/les électrode(s) interdigitée(s) (12, 13) et/ou dans la couche de support (14) de manière à ce qu'il/elle présente/présentent une forme en section transversale semi-circulaire, ondulée, triangulaire, quadrangulaire, pentagonale et/ou hexagonale.

7. Procédé de fabrication d'un élément détecteur (10) selon l'une quelconque des revendications précédentes, dans lequel
- un matériau est déposé par un procédé de structuration par laser d'un corps de base, qui comprend une couche couche métallique (6) plane disposée sur une couche de support plane (14), de manière à ce qu'un système d'électrodes interdigitées (12, 13) comportant au moins deux électrodes interdigitées (12, 13) en forme de peignes imbriqués soit réalisé à partir de la couche métallique (6) et qu'une structure profilée (21, 22 ; 16, 17) soit introduite à la fois dans au moins l'une dés électrodes interdigitées (12, 13) et dans la couche de support (14) ; ou
- une structure profilée (16, 17) constituée du matériau de la couche de support (14) est imprimée sur une couche de support (14) par un procédé de sérigraphie comportant plusieurs étapes de sérigraphie et un système d'électrodes interdigitées comportant au moins deux électrodes interdigitées (12, 13) en forme de peignes imbriqués est de nouveau imprimé sur ladite structure profilée (16, 17) de la couche de support (14) de manière à ce qu'au moins l'une des électrodes interdigitées (12, 13) présente une structure profilée (21, 22).

8. Procédé de fabrication d'un élément détecteur (10) selon l'une quelconque des revendications 1 à 6, dans lequel
- une structure profilée (16, 17) constituée du matériau de la couche de support (14) est imprimée sur là couche de support (14) lors d'une première étape de procédé par un procédé de sérigraphie comportant plusieurs étapes de sérigraphie et un système d'électrodes interdigitées (12, 13) comportant au moins deux électrodes interdigitées (12, 13) en forme de peignes imbriqués est de nouveau imprimé sur ladite structure profilée (16, 17) de la couche de support (14) ; et
- le matériau des électrodes interdigitées (12, 13) est déposé lors d'une seconde étape de procédé de manière à ce qu'une structure profilée (21, 22) soit introduite par un procédé de structuration par laser dans au moins l'une des électrodes interdigitées (12, 13).

9. Utilisation d'un élément détecteur (10) selon l'une quelconque des revendications 1 à 6 dans un appareil de mesure d'atelier pour l'étude des gaz d'échappement ou dans un appareil de mesure destiné à contrôler la qualité de l'air ou à surveiller le mode de fonctionnement d'un moteur à combustion interne, par exemple d'un moteur diesel, ou d'une installation de combustion, par exemple d'un chauffage au fioul, ou à surveiller le bon fonctionnement d'un filtre à particules et/ou l'état de chargement d'un filtre à particules ou à surveiller des processus de fabrication chimiques, des systèmes d'échappement et/ou des systèmes de post-traitement de gaz d'échappement.
